# EUROPÄISCHE PATENTSCHRIFT

(11) **EP 2 550 515 B1**
(45) Veröffentlichungstag und Bekanntmachung des Hinweises auf die Patenterteilung: **07.11.2018**
(21) Anmeldenummer: 11709701.4
(22) Anmeldetag: 17.03.2011
(51) Int. Cl.: G01K 1/12, G01K 7/02, H01R 13/533

(54) **GEKAPSELTER ELEKTRISCHER ANSCHLUSS FÜR THERMISCH UND/ODER DRUCKSEITIG BEANSPRUCHTE SENSOREN**
ENCAPSULATED ELECTRICAL CONNECTION FOR THERMALLY AND/OR PRESSURE STRESSED SENSORS
CONNEXION ÉLECTRIQUE BLINDÉE POUR CAPTEURS SOLLICITÉS THERMIQUEMENT ET/OU CÔTÉ PRESSION

(30) Priorität: 10.11.2010 DE 102010050952; 25.03.2010 DE 102010012794
(43) Veröffentlichungstag der Anmeldung: 30.01.2013
(73) Patentinhaber: Tesona GmbH & Co. KG, 99819 Hörselberg/Hainich (DE)
(72) Erfinder: BLUM, Hendrik, 98544 Zella-Mehlis (DE); MAUS, Wolfgang, 51429 Bergisch Gladbach (DE); LANTZSCH, Heiko, 99817 Eisenach (DE)
(74) Vertreter: Kruspig, Volkmar
(86) Internationale Anmeldenummer: PCT/EP2011/054044
(87) Internationale Veröffentlichungsnummer: WO 2011/117136

(56) Entgegenhaltungen:
- EP-A1- 1 953 512
- US-A- 3 896 409
- US-A1- 2006 013 282

## Beschreibung

Die Erfindung betrifft einen gekapselten elektrischen Anschluss für insbesondere thermisch und/oder druckseitig beanspruchte Sensoren, wie z. B. Temperatur-Messfühler im Abgaszweig von Motoren, insbesondere Mantelthermoelemente, umfassend ein Rohr oder eine Hülse, an dessen zum Messort gerichteten Ende mindestens ein Sensorelement befindlich ist, wobei über das Rohr oder die Hülse Anschlussleitungen zum vom Messort entfernten Ende geführt sind, wobei die Anschlussleitungen des mindestens einen Sensorelements mit einem Kabel in Verbindung stehen und der Verbindungsbereich von einer Schutzanordnung umgeben ist, gemäß Oberbegriff des Patentanspruchs 1.

Aus der PCT/WO 2007/113105 A1 ist ein Messfühler für Hochtemperaturanwendungen vorbekannt. Der dortige Messfühler dient der Bestimmung einer physikalischen Größe in einem Messvolumen. Der Messfühler umfasst ein Sensorelement, ein Rohr oder einen Stab, an dessen in das Messvolumen gerichtetem Ende das Sensorelement angebracht ist und welcher die für den Anschluss des Sensorelements notwendigen elektrischen Anschlussleitungen aufnimmt. Darüber hinaus ist eine Befestigungshülse vorhanden, durch welche das Rohr oder der Stab durchgeführt und am Gehäuse befestigbar ist. Zwischen der Innenfläche der Befestigungshülse und dem Rohr oder dem Stab ist ein umlaufender Spalt gebildet, wobei eine Glasfüllung, die im Spalt zwischen der Befestigungshülse und dem Rohr befindlich ist, der gasdichten Verbindung dient.

Die EP 1 953 512 A1 beschreibt einen Temperaturfühler zur Verwendung im Abgaszweig von Motoren. Die Anschlussleitungen des vorbekannten Messfühlers sind mit Verbindungsleitungen eines Kabels kontaktiert und mindestens im Bereich dieser Verbindungen gegeneinander elektrisch isoliert.

Darüber hinaus sind die elektrischen Verbindungen von einer Anschlussschutzhülse umschlossen. Die Anschlussschutzhülse weist eine Einführung für das Kabel auf. Diese Einführung ist durch eine Einrollung der Anschlussschutzhülse querschnittsverkleinert, d. h. verpresst, so dass das Kabel mit der Anschlussschutzhülse fest verbunden und die Einführung abgedichtet ist. Die Befestigungshülse selbst kann mit einer Hohlmutter an einem Gehäuse oder einer Baueinheit, z. B. einem Abgasrohr fixiert werden.

Zum Stand der Technik sei noch auf die DE 32 37 824 A1, die US 5,228,975 B und die EP 0 056 585 A2 verwiesen, wobei in diesen Dokumenten Messfühler und Sensoren zur Bestimmung physikalischer Größen auch mit Sinterglas-Formlingen unter dem Aspekt der optimierten Abdichtung beschrieben sind. Aus dem Vorgenannten ist es Aufgabe der Erfindung, einen weiterentwickelten gekapselten elektrischen Anschluss für thermisch und/oder druckseitig beanspruchte Sensoren, nämlich Temperatur-Messfühler im Abgaszweig von Motoren, insbesondere Mantelthermoelemente anzugeben, wobei eine Schutzanordnung zu schaffen ist, die allen mechanischen und thermischen Belastungen genügt, so dass die gewünschte Langzeitstabilität und Betriebsfähigkeit entsprechender Sensoren gewährleistet ist.

Die Lösung der Aufgabe der Erfindung erfolgt durch einen gekapselten elektrischen Anschluss für hochbeanspruchte Sensoren gemäß der Merkmalskombination nach Patentanspruch 1, wobei die Unteransprüche mindestens zweckmäßige Ausgestaltungen und Weiterbildungen darstellen.

Es wird demnach von einem gekapselten elektrischen Anschluss gemäß Anspruch 1 ausgegangen.

Weiter ausgestaltend können die Umspritzungen einen Abschnitt der Außen- oder Isolationsumhüllung des Kabels umfassen.

Am abgangsseitigen Ende des Kabels, d.h. an dem Ende, wo das Kabel in die Signalverarbeitungs- und -auswerteeinheit eingeführt ist, bzw. in der Nähe einer solchen Einheit kann eine Entlüftungsmembran angeordnet werden. Diese Entlüftungsmembran besitzt bei einer bevorzugten Ausgestaltung eine Ventilfunktion.

Hierdurch können eingeschlossene Gase austreten, jedoch kann kein Gas in das Innere des Verbindungsbereichs hinein gelangen, so dass es zu keiner unerwünschten Erhöhung des Innendrucks kommt.

Eine äußere Schutzanordnung ist als metallischer Hohlkörper, insbesondere zylindrischer Hohlkörper ausgebildet, welcher sich von der Sensorelementeseite bis hin zur Außenumhüllung des Kabels erstreckt.

Der metallische Hohlkörper kann hier mit einer Schutzhülse des Sensorelements stoffschlüssig, z. B. durch Laserschweißung verbunden werden.

Ergänzend kann zwischen der Außenumhüllung des Kabels und dem metallischen Hohlkörper eine Dichtung angeordnet werden.

An den stoffschlüssigen Verbindungsabschnitt kann sich ein Verpressungsabschnitt anschließen, der auf das Rohr oder die Hülse bzw. die Schutzhülse des Sensorelements wirkt.

Im Bereich des Formkörpers kann der metallische Hohlkörper eine Aufweitung aufweisen, um unerwünschte Druckkräfte auf den vom Formkörper umschlossenen Anschlussleitungsbereich zu vermeiden.

Der Formkörper besitzt Durchgangsöffnungen zur Aufnahme der Anschlussleitungen, wobei die Abschnitte zwischen den Durchgangsöffnungen als Trennstege wirken.

Nach einem nicht beanspruchten Beispiel ist am Rohr- oder Hülsenende in Richtung Verbindungsbereich ein umhüllender Stützkragen vorgesehen, dessen Außendurchmesser größer als der Durchmesser des Rohr- oder Hülsenendes ist, wobei der Stützkragen nebst Verbindungsbereich über eine Umspritzung verfügt.

Bei diesem Aspekt stabilisiert der Stützkragen einerseits die in einem folgenden Fertigungsschritt ausgebildete Umspritzung. Andererseits schafft der Stützkragen einen Raum, der mindestens im Bereich des in diesen Raum eintauchenden Rohr- oder Hülsenendes mit einem Dichtmaterial verschlossen ist. Hierbei kann es sich um eine Glasperle oder ein Hochtemperatur-Kunststoffmaterial handeln.

Bei einem weiteren Beispiel ist das Rohr oder die Hülse abschnittsweise von einem äußeren Stützrohr umgeben. Dieses Stützrohr ist bevorzugt am vom Thermoelement entfernten Ende angeordnet und wird kraft- und/oder formschlüssig über einen Einzug am Rohr oder an der Hülse fixiert. Das Stützrohr selbst kann der Aufnahme eines Befestigungsflansches dienen oder einstückig mit einem solchen Befestigungsflansch versehen sein.

Bei einem weiteren Beispiel sind die innerhalb des Rohres verlaufenden Messleitungen am Thermoelement-seitigen Ende verdrillt. Diese Verdrillung führt zu einer Zentrierung und einem gegenseitigen Ausrichten der Messleitungen. Am Verbindungsabschnitt der beiden Messleitungen, der beispielsweise durch ein Wasserstoff-Schweißverfahren erzeugt wird, entsteht dann die Thermoelement-Messperle.

Die Erfindung soll nachstehend anhand von Ausführungsbeispielen sowie unter Zuhilfenahme von Figuren näher erläutert werden.

Hierbei zeigen:
- Fig. 1: eine erste Ausführungsform der Erfindung mit Formkörper, der sich vom Rohr- oder Hülsenende in Richtung Verbindungsbereich zum Zweck einer Kriechstreckenverlängerung erstreckt, in prinzipieller Schnittdarstellung,
- Fig. 2: eine prinzipielle Schnittdarstellung, wobei der Bereich zwischen Formkörper und isolierter Adernherausführung aus dem Kabel vollständig mediendicht verschweißt oder umspritzt ist,
- Fig. 3: eine prinzipielle Schnittdarstellung mit einer Umspritzung ähnlich derjenigen wie in der Fig. 2 gezeigt, jedoch hier geführt bis zum Außen- oder Isolationsumhüllungsbereich des Kabels sowie einer Entlüftungsmembran am abgangsseitigen Ende des Kabels,
- Fig. 4: eine Prinzipschnittdarstellung der erfindungsgemäßen Anordnung mit Kriechstrecken verlängerndem Formkörper und Schutzanordnung, ausgebildet als zylindrischer, metallischer Hohlkörper, hier ohne Umspritzung, wobei jedoch bei dieser Ausführungsform auch eine Umspritzung, wie in den Fig. 2 und 3 gezeigt, möglich ist,
- Fig. 5: eine Ausführung ähnlich Fig. 4 mit zusätzlicher Buchse 16 zur Verpressung und Zugentlastung,
- Fig. 6 - Fig. 8: Ausführungsvarianten des Isolationsformkörpers in Schnittdarstellung,
- Fig. 9: ein Beispiel mit umhüllendem Stützkragen,
- Fig. 10: eine Weiterbildung des Beispiels mit äußerem Stützrohr und
- Fig. 11: ein weiteres Beispiel mit verdrillten Messleitungsenden im Bereich des Thermoelements.

Bei den nachstehenden Erläuterungen der Figuren wird jeweils für dieselben Elemente auf die gleichen Bezugszeichen zurückgegriffen.

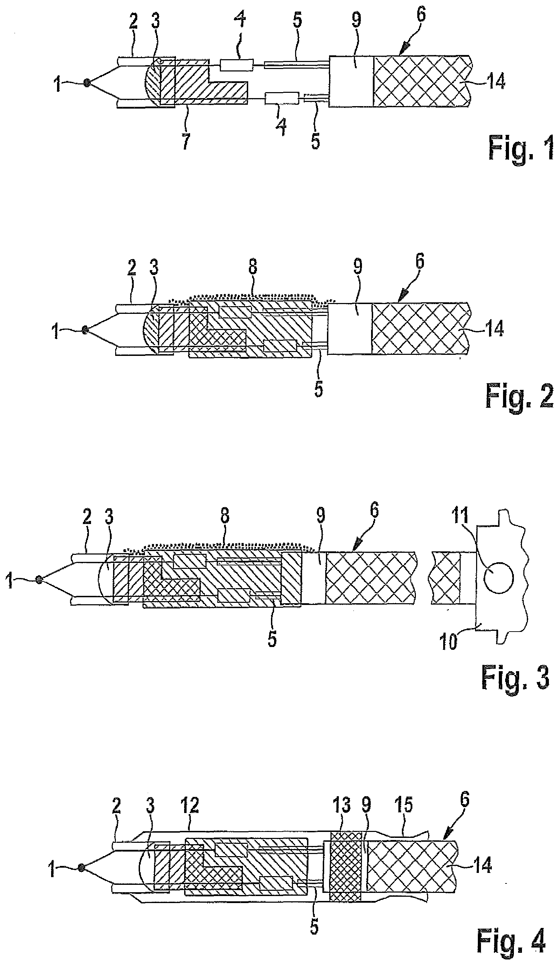

Bei den Ausführungsformen gemäß den Fig. 1 bis 4 wird von einem Temperatur-Messfühler ausgegangen, der eine Messspitze 1 mit einem Thermoelement aufweist.

Anschlussenden des Thermoelements sind über ein Rohr 2 geführt, wobei im Bereich 3 eine Einglasung vorhanden ist.

Enden der Anschlussdrähte des Thermoelements 1 werden an den Abschnitten 4 mit abisolierten Enden der Adern 5 des Kabels 6, z. B. durch Splice-Technik verbunden. Alternativ können die Anschlussdrähte des Thermoelementes 1 in Hülsen eingesteckt werden, welche sich an den Enden der Adern 5 des Kabels 6 befinden. Hier kann die Schneid-Klemmtechnik oder ein Press-fit-Verfahren genutzt werden.

Ein Kriechstrecken verlängernder Formkörper 7 nimmt die Enden des Thermoelementenanschlusses auf.

Wie aus den Figuren ersichtlich, ist der Formkörper 7 gestuft ausgebildet, so dass sichergestellt ist, dass zwischen den Abschnitten 4 keine Kurzschlussgefahr besteht.

Unerwünschte Kriechströme zwischen der Außenoberfläche des Rohres 2 und den Anschlussenden des Thermoelements 1 werden bei der Lösung gemäß Fig. 1 vermieden.

Eine weitere Verbesserung des Kriechstreckenverhaltens ist gemäß den Ausführungsbeispielen nach den Fig. 2 bis 4 möglich.

Hier wird, wie in der Fig. 2 gezeigt, der Abschnitt vom Einglasungsbereich 3 bis hin zu den isolierten Adern 5 einschließlich des Verbindungsbereichs 4 umspritzt, und zwar durch ein mediendichtes Material, insbesondere eine Kunststoffspritzmasse, welche mit dem Formkörper 7 und den isolierenden Adern 5 mediendicht verschweißt werden kann.

Bei der Ausführungsform nach Fig. 3 reicht die Umspritzung 8 bis zur Außen- oder Isolationsumhüllung 9 des Kabels 6.

Bei dieser Ausführungsform ist es vorteilhaft, wenn im Übergangsbereich Kabel 6 und der Signalverarbeitungs- und -auswerteeinheit 10 eine ventilartige Entlüftungsmembran 11 vorhanden ist.

Wie in der Fig. 4 gezeigt, kann die vorstehend beschriebene Anordnung mit einem metallischen Hohlkörper 12 umgeben sein, wobei dieser metallische Hohlkörper 12 stoffschlüssig mit dem Rohr 2 verbunden und im Bereich 9 des Kabels 6 ergänzend eine Dichtung 13 vorgesehen ist.

Der metallische Hohlkörper 12, der bevorzugt zylindrisch ausgeführt ist, kann im Bereich des Schirmmantels 14 des Kabels 6 mit einer Verpressung 15 versehen sein, die gleichzeitig als Zugentlastung wirkt.

Ergänzend kann auch im Bereich der stoffschlüssigen Verbindung mit dem Rohr 2 ein Verpressungsabschnitt ausgebildet werden, um die z.B. Laserschweißnaht mechanisch zu entlasten.

Die Entlüftung 11 ist bevorzugt als Membran-Entlüftung realisiert, d. h. dass Gase austreten können, jedoch ein Zugang von Gasen, aber auch Flüssigkeiten verhindert ist.

Das Kabel 6 kann als Thermoleitung nach IEC 60584 ausgeführt werden, wobei anstelle einer Spleiß-Verbindung auch andere geeignete elektrische Verbindungstechniken einsetzbar sind. Denkbar ist Umcrimpen, gegebenenfalls unterstützt durch eine Laserschweißung entlang der Crimphülse. Hierdurch können insbesondere starre oder halbstarre Leitungen sicher mit einem flexiblen Litzenkabel kontaktiert werden.

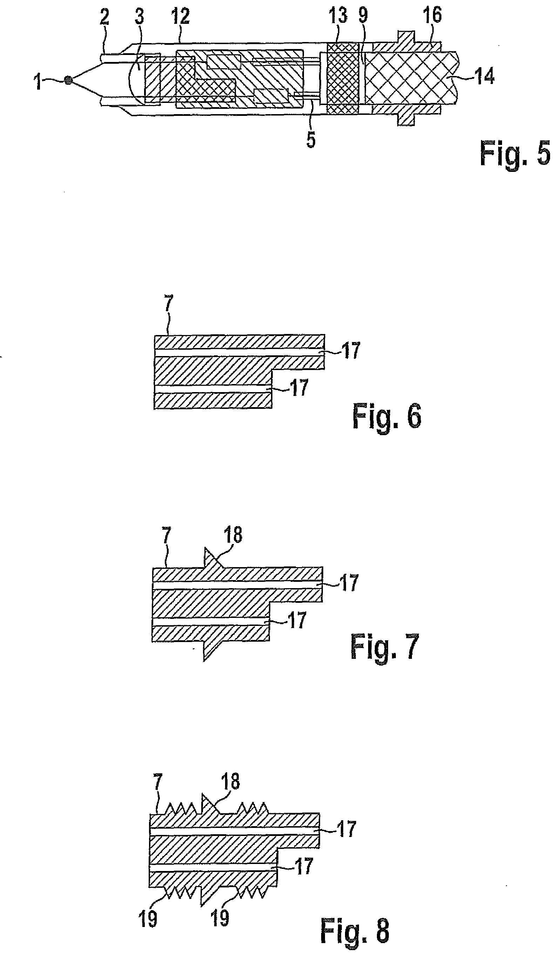

Die Fig. 5 zeigt eine Ausführungsform in Schnittdarstellung der erfindungsgemäßen Anordnung in derjenigen nach Fig. 4, wobei jedoch hier ergänzend eine zusätzliche Buchse 16 zur Verpressung und Zugentlastung vorhanden ist. Diese Buchse wird zum einen auf dem Anschlusskabel 6 und zum anderen auf der Außenumhüllung 9 durch Verpressen fixiert.

Die Darstellungen nach den Fig. 6 bis 8 zeigen Varianten des Formkörpers in Längsschnittdarstellung.

Gemäß Fig. 7 handelt es sich um eine zylindrische Ausführung mit Stufenschnitt, wobei Kapillare 17 zur Durchführung des Anschlusses des Thermoelementes vorhanden sind.

Bei der Darstellung nach Fig. 7 wird wiederum von einer zylindrischen Ausführung mit Stufenschnitt und Kapillaren 17 ausgegangen, wobei jedoch der Zylinder umfangseitig einen hervorspringenden Anschlag 18 aufweist.

Dieser Anschlag 18 befindet sich auch bei der Variante mit zylindrischer Ausführung und Stufenschnitt nach Fig. 8, wobei hier jedoch beidseitig des Anschlages spezielle Dichtlabyrinthe 19 vorhanden sind.

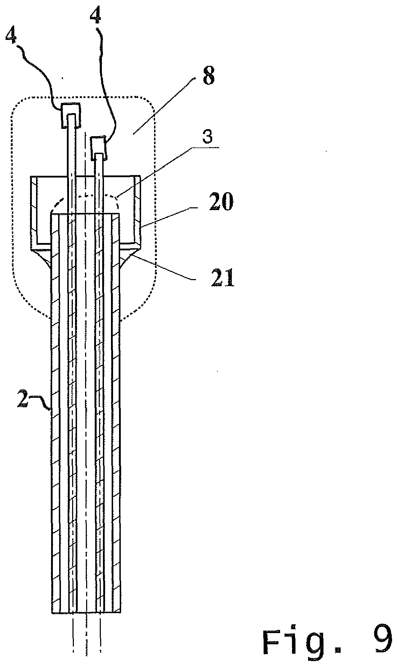

Die Fig. 9 zeigt eine Längsschnittdarstellung eines Abschnitts des gekapselten elektrischen Anschlusses für Mantelthermoelemente zur Bildung von Temperaturmessfühlern, insbesondere zu deren Einsatz im Abgaszweig von Brennkraftmaschinen.

Am vom Thermoelement (nicht gezeigt) entfernten Ende ist das Rohr 2 in Richtung Verbindungsbereich 4 mit einem umhüllenden Stützkragen 20 versehen. Es ist aus der Fig. 9 ersichtlich, dass der Außendurchmesser des Stützkragens 20 größer als der Durchmesser des Rohres 2 ist, wobei der Stützkragen 20 mit Verbindungsbereich 4 nach Ankontaktierung der Adern (siehe beispielsweise Fig. 1) von einer Umspritzung 8 umhüllt ist. Bei der Ausführungsform der Erfindung nach Fig. 9 kann selbstverständlich auch der Formkörper 7 mit den voranstehend geschilderten Eigenschaften und Merkmalen eingesetzt werden, was jedoch nicht zwingend ist.

Der Stützkragen 20 ist stoffschlüssig, bevorzugt durch eine LaserSchweißnaht 21 mit dem Rohr 2 verbunden.

Der vom Stützkragen 20 gebildete Raum kann mindestens im Bereich des hier eintauchenden Rohr- oder Hülsenendes mit einem Dichtmaterial 3 verschlossen werden. Dieses Dichtmaterial 3 kann z.B. ein Hochtemperatur-Kunststoffmaterial sein.

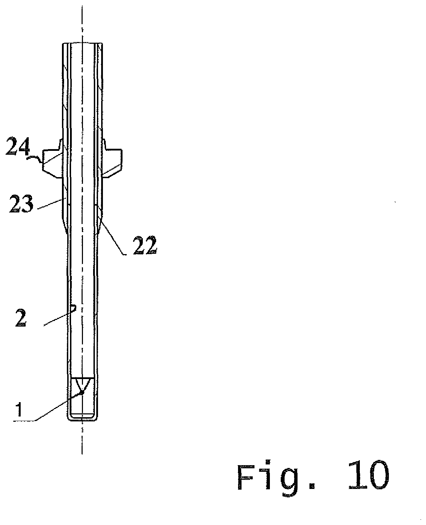

Gemäß der Darstellung nach Fig. 10 ist das Rohr 2 abschnittsweise von einem äußeren, bevorzugt metallischen Stützrohr 23 umgeben.

Das Stützrohr 23 ist am vom Thermoelement 1 (Messspitze) entfernten Ende angeordnet und kann bei einer Ausführungsform wie in der Figur gezeigt über einen Befestigungsflansch 24 verfügen.

Das Stützrohr 23 ist kraft- und/oder formschlüssig über einen Einzug 22 am Rohr bzw. an der Hülse 2 fixiert.

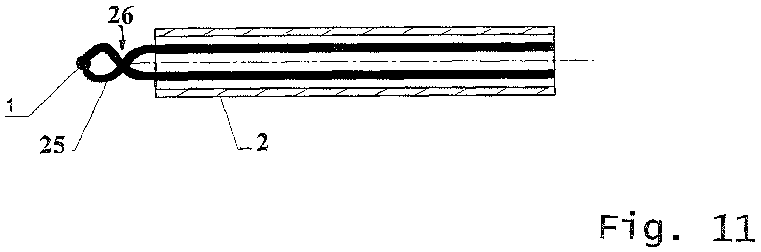

Eine Stabilisierung der Messspitze mit Thermoelement 1 gelingt gemäß einer Lösung, wie in Fig. 11 dargestellt.

Die im Rohr 2 geführten Messleitungen 25 liegen Thermoelement-seitig frei und verfügen über eine zentrierende Verdrillung 26. Hierdurch richten sich die Messleitungen zueinander aus und es tritt eine Stabilisierung des gesamten Messspitzenbereichs ein.

### Bezugszeichenliste

- 1: Thermoelement
- 2: Rohr
- 3: Einglasung
- 4: Abschnitt
- 5: Ader
- 6: Kabel
- 7: Formkörper
- 8: Umspritzung
- 9: Außenumhüllung
- 10: Signalverarbeitungseinheit
- 11: Entlüftung
- 12: metallischer Hohlkörper
- 13: Dichtung
- 14: Schirmmantel
- 15: Verpressung
- 16: Buchse, außen
- 17: Kapillare
- 18: Anschlag
- 19: Dichtlabyrinth
- 20: Stützkörper
- 21: Schweißnaht
- 22: Einzug
- 23: Stützrohr
- 24: Befestigungsflansch
- 25: Messleitung / Anschlussleitung
- 26: Verdrillung

## Patentansprüche

1. Gekapselter elektrischer Anschluss für thermisch und/oder druckseitig beanspruchte Sensoren, nämlich Temperatur-Messfühler im Abgaszweig von Motoren, insbesondere Mantelthermoelemente,
umfassend ein Rohr oder eine Hülse, an dessen zum Messort gerichteten Ende mindestens ein Sensorelement befindlich ist, wobei über das Rohr oder die Hülse Anschlussleitungen zum vom Messort entfernten Ende geführt sind, wobei die Anschlussleitungen des mindestens einen Sensorelements mit einem Kabel (6) in Verbindung stehen und der Verbindungsbereich (4) von einer Schutzanordnung (12) umgeben ist, weiterhin vom Rohr- oder Hülsenende in Richtung Verbindungsbereich (4) ein aus einem isolierenden Material bestehender, gestuft und zylindrisch ausgebildeter Formkörper (7) mit Trennstegen zur beabstandeten Fixierung der Anschlussleitungsenden befindlich ist,
**dadurch gekennzeichnet, dass**
die Stufung des Formkörpers (7) so ausgebildet ist,
dass zwischen den Verbindungsbereichen (4) keine Kurzschlussgefahr besteht, wobei hierfür Kapillare (17) zur Durchführung der Anschlussleitungsenden vorhanden sind, weiterhin die Stufung mit Stufenschnitt in Längsrichtung des zylindrischen Formkörpers (7) je Stufe eine der Kapillare (17) aufweist, der gesamte Abschnitt zwischen Rohr- oder Hülsenende, Verbindungsbereich (4) und Adern (5) des Kabels (6) mediendicht umspritzt ist und die Umspritzung (8) aus einem isolierenden Kunststoffmaterial besteht.

2. Gekapselter elektrischer Anschluss nach Anspruch 1,
**dadurch gekennzeichnet, dass**
die Umspritzung (8) einen Abschnitt (9) der Außen- oder Isolationsumhüllung des Kabels (6) umfasst.

3. Gekapselter elektrischer Anschluss nach Anspruch 2,
**dadurch gekennzeichnet, dass**
am abgangsseitigen Ende des Kabels (6) eine Entlüftungsmembran (11) anordnet ist.

4. Gekapselter elektrischer Anschluss nach Anspruch 3,
**dadurch gekennzeichnet, dass**
die Entlüftungsmembran (11) eine Ventilfunktion besitzt.

5. Gekapselter elektrischer Anschluss nach einem der Ansprüche 1 bis 4, **dadurch gekennzeichnet, dass**
die Schutzanordnung als metallischer Hohlkörper (12) ausgebildet ist, welcher sich von der Sensorelementeseite bis zur Außenumhüllung des Kabels (6) erstreckt.

6. Gekapselter elektrischer Anschluss nach Anspruch 5,
**dadurch gekennzeichnet, dass**
der metallische Hohlkörper (12) mit einer Schutzhülse oder einem Schutzrohr (2) des Sensorelements (1) stoffschlüssig verbunden ist.

7. Gekapselter elektrischer Anschluss nach Anspruch 5 oder 6,
**dadurch gekennzeichnet, dass**
zwischen der Außenumhüllung (9) des Kabels (6) und dem metallischen Hohlkörper (12) eine Dichtung (13) angeordnet ist.

8. Gekapselter elektrischer Anschluss nach Anspruch 6 oder 7,
**dadurch gekennzeichnet, dass**
am stoffschlüssigen Verbindungsabschnitt ein Verpressungsabschnitt ausgebildet ist, welcher auf die Schutzhülse oder das Schutzrohr (2) wirkt.

## Claims

1. Encapsulated electrical connection for thermally and/or pressure stressed sensors, in particular temperature measuring sensor in the exhaust gas branch of engines, in particular sheathed thermocouples, comprising a tube or a sleeve, wherein at least one sensor element is located at its end directed towards the measurement location, connecting leads being guided via the tube or the sleeve to the end remote from the measurement location, the connecting leads of the at least one sensor element being connected to a cable (6) and the connecting region (4) being surrounded by a protective arrangement (12),
furthermore a stepped and cylindrically designed molded body consisting of an insulating material is located from the tube or sleeve end in the direction of the connecting region (4), with separating webs for spaced fixation of the connecting lead ends,
**characterized in that** the stepping of the molded body (7) is designed such that there is no danger of a short circuit between the connecting regions, wherein for this purpose capillaries (17) are provided for feeding-through the connecting lead ends, wherein furthermore the stepped-cut stepping in the longitudinal direction of the cylindrical molded body (7) comprises one of the capillaries (17) for each step, the entire section between the tube or sleeve end, the connecting region (4) and the cores (5) of the cable (6) is encapsulated in a media-tight manner and the encapsulation (8) consists of an insulating plastic material.

2. Encapsulated electrical connection according to Claim 1,
**characterized in that** the encapsulation (8) comprises a portion (9) of the outer or insulation sheath of the cable (6).

3. Encapsulated electrical connection according to Claim 2,
**characterized in that** a venting membrane (11) is arranged at the outgoing end of the cable (6).

4. Encapsulated electrical connection according to Claim 3,
**characterized in that** the venting membrane (11) has a valve function.

5. Encapsulated electrical connection according to Claim 1 to 4,
**characterized in that** the protective arrangement is formed as a metallic hollow body (12) which extends from the sensor element side to the outer sheath of the cable (6).

6. Encapsulated electrical connection according to Claim 5, **characterized in that** the metallic hollow body (12) is firmly bonded with a protective sleeve or a protective tube (2) of the sensor element (1).

7. Encapsulated electrical connection according to Claim 5 or 6, **characterized in that** a seal (13) is arranged between the outer sheath (9) of the cable (6) and the metallic hollow body (12).

8. Encapsulated electrical connection according to Claim 6 or 7, **characterized in that** a compression portion is formed at the firmly bonded connection portion, which acts on the protective sleeve or the protective tube (2).

## Revendications

1. Connexion électrique encapsulée pour des capteurs sollicités thermiquement et/ou sollicités en pression, à savoir pour des capteurs de mesure de température dans la ligne d'échappement de gaz de moteurs, en particulier pour des thermocouples chemisés,
comportant un tube ou manchon dont l'extrémité dirigée vers l'emplacement de mesure présente au moins un élément capteur, des lignes de connexion étant menées via le tube ou le manchon jusqu'à l'extrémité éloignée de l'emplacement de mesure, les lignes de connexion dudit au moins un élément capteur étant en liaison avec un câble et la zone de liaison (4) étant entourée par un ensemble de protection (12), et il est prévu en outre un corps moulé (7) constitué d'un matériau isolant et réalisé sous forme étagée et cylindrique qui s'étend depuis l'extrémité de tube ou de manchon en direction de la zone de liaison (4) et qui comprend des barrettes de séparation pour la fixation à distance des extrémités les lignes de connexion,
**caractérisée en ce que**
l'étagement du corps moulé (7) est réalisé de telle sorte qu'il n'y a pas de risque de court-circuit entre les zones de liaison (4) et à cet effet il est prévu des capillaires (17) pour faire passer les extrémités de lignes de connexion, l'étagement présente pour chaque étage l'une des capillaires (17) en coupe étagée en direction longitudinale du corps moulé cylindrique (7), l'ensemble du tronçon entre l'extrémité de tube ou de manchon, de la zone de liaison (4) et des fils (5) du câble (6) est surmoulé par injection de façon étanche aux fluides et le surmoulage par injection (8) est constitué en un matériau synthétique isolant.

2. Connexion électrique encapsulée selon la revendication 1,
**caractérisée en ce que**
le surmoulage par injection (8) comprend une portion (9) de la gaine extérieure ou isolante du câble (6).

3. Connexion électrique encapsulée selon la revendication 2,
**caractérisée en ce que**
une membrane de désaération (11) est agencée à l'extrémité côté sortie du câble (6).

4. Connexion électrique encapsulée selon la revendication 3,
**caractérisée en ce que**
la membrane de désaération (11) possède une fonction de vanne.

5. Connexion électrique encapsulée selon l'une des revendications 1 à 4, **caractérisée en ce que**
l'ensemble de protection est réalisé sous forme de corps creux métallique (12) qui s'étend depuis le côté de l'élément capteur jusqu'à la gaine extérieure du câble (6).

6. Connexion électrique encapsulée selon la revendication 5, **caractérisée en ce que**
le corps creux métallique (12) est relié en coopération de matière avec un manchon de protection ou avec un tube de protection (2) de l'élément capteur (1).

7. Connexion électrique encapsulée selon la revendication 5 ou 6, **caractérisée en ce que**
un joint d'étanchéité (13) est agencé entre la gaine extérieure (9) du câble (6) et le corps creux métallique (12).

8. Connexion électrique encapsulée selon la revendication 6 ou 7, **caractérisée en ce que**
une portion de pressage est réalisée sur la portion de liaison en coopération de matière, qui agit sur le manchon de protection ou sur le tube de protection (2).
